# EUROPÄISCHE PATENTANMELDUNG

(11) **EP 0 769 548 A1**
(43) Veröffentlichungstag der Anmeldung: **23.04.1997**
(21) Anmeldenummer: 96114669.3
(22) Anmeldetag: 13.09.1996
(51) Int. Cl.: C11D 3/00, C11D 1/66, C11D 3/12, C11D 3/37, B01D 19/04

(54) **Entschäumerdispersionen für wässrige Tensidsysteme**

(30) Priorität: 18.10.1995 DE 19538751
(71) Anmelder: HÜLS AKTIENGESELLSCHAFT, 45764 Marl (DE)
(72) Erfinder: Balzer, Dieter, Dr., 45721 Haltern (DE)

(57) **Zusammenfassung**

Die Erfindung betrifft Entschäumerdispersionen für wäßrige Tensidsysteme, einsetzbar als Antischaummittel, insbesondere für Wasch- und Reinigungsmittel und Textilveredelungsflotten.

Die wäßrige Entschäumerdispersion enthält 5 bis 40 % Silikonöl, 0,3 bis 15 % hydrophobierte Kieselsäure und als Dispergatoren eine Kombination aus einem tensidischen Hauptdispergatorsystem, vorzugsweise Alkylpolyglucosiden ggf. in Mischung mit anionischen oder nichtionischen Tensiden, und einem nicht-tensidischen wasserlöslichen oder wasserdispergierbaren Hilfsdispergatorsystem, vorzugsweise Xanthane, Guar und Guarderivate, Cellulosederivate und/oder hydrophile Kieselsäure.

## Beschreibung

Die Erfindung betrifft Entschäumerdispersionen für wäßrige Tensidsysteme, einsetzbar als Antischaummittel insbesondere für Wasch- und Reinigungsmittel und Textilveredelungsflotten.

Die Verhinderung des Schaums bzw. seine Begrenzung - man spricht auch von Schaumsteuerung - ist bei vielen dynamischen Prozessen, die einen innigen Kontakt zwischen flüssiger und fester Oberfläche erfordern, notwendig. Die Mitbeteiligung einer Gasphase in Form von Schaum, die häufig bei wäßrigen Tensidsystemen auftritt, erschwert den Kontakt. Der Zusatz von Antischaummitteln dient daher dazu, den Kontakt zu verbessern und die Netzwirkung zu erhöhen.

Antischaumformulierungen basieren häufig auf der Kombination aus Polysiloxanölen und feinteiliger hydrophobierter Kieselsäure (Ferch, H. and Leonard, W. in "Defoaming", Surfactant Science Series Vol. 45, ed. Garrett, P.R., New York, 1993). Sie sind bekannt als sehr effektive Entschäumer, deren Wirkung selbst bei relativ niedriger Dosierung weitgehend unabhängig von der Zusammensetzung der Flotte und den Bedingungen ist. Die Entschäumerwirksamkeit wird in erster Linie durch den Grad der Hydrophobierung der Festkörperoberfläche bestimmt; je hydrophober die Kieselsäure, desto höher ist die Entschäumerwirkung. Durch zugesetztes Silikonöl nimmt die Hydrophobierung weiter zu. Gleichzeitig spreitet das Öl aufgrund seiner sehr niedrigen Oberflächenspannung auf der Grenzfläche "wäßrige Tensidlösung/Luft" und dient daher der hydrophobierten Kieselsäure als Verteilungsmedium, so daß ein Transport der schaumstabilisierenden Tensidmoleküle einschließlich des assoziierten Wassers aus der Lamelle an die Festkörperoberfläche möglich wird. Der Lamellenfilm wird dabei immer dünner, schließlich kommt es zum Bruch, der Schaum zerfällt (Sawicki, G.C., JAOCS 65, 1013 (1988).

In Anbetracht dieses komplizierten Transportmechanismus, der durch die stabilisierende und häufig auch destabilisierende Wirkung des Marangoni-Effektes weiter kompliziert wird, ist es nicht überraschend, daß die Wirkung des Antischaummittels stark von der Formulierung abhängt.

Letztere ist häufig eine Emulsion (DE-OSS 42 23 768, 43 43 185) oder eine Dispersion (EP-A 573 699). Nun sind Silikonöle allein bereits als schwierig zu emulgierende Flüssigkeiten bekannt (Sawicki, loc. cit.), und feinteiliger Kieselsäure wird ein emulsionsbrechendes Potential zugeschrieben (DE-OS 42 23 768). Mithin ist die Herstellung einer lagerfähigen, gut handhabbaren (fließfähigen) Silikonentschäumerdispersion ein diffiziles Problem.

Alkylpolyglycoside spielen in Kombination mit anderen Stoffen wie C₁₆-C₂₈-Fettalkoholen (EP-A 396 044) sowie mit einem Gemisch aus zwei unterschiedlich endgruppenverschlossenen und nicht-endgruppenverschlossenen Polyglykolethern (DE-OS 39 23 602) als Entschäumersysteme für spezielle Anwendungen auch schon eine gewisse Rolle.

Wirkungsvolle Emulgatoren für O/W-Emulsionen von Polysiloxanölen sind Alkylpolyglucoside (EP-A 418 479). Diese haben außerdem den großen Vorteil hervorragender Umweltverträglichkeit. In Gegenwart von feinteiliger Kieselsäure, wie sie wirkungsvolle Entschäumer voraussetzen, sind die betreffenden Dispersionen jedoch weniger stabil.

Die Aufgabe der vorliegenden Erfindung ist daher, Silikonentschäumerdispersionen mit Alkylpolyglycosiden als Hauptdispergatoren bereitzustellen, deren Stabilität technischen Ansprüchen genügt.

Überraschenderweise wurde gefunden, daß sich diese Aufgabe ohne Einbuße der hohen Entschäumungswirksamkeit dadurch lösen läßt, daß Alkylpolyglycoside mit Hildsdispergatoren kombiniert werden.

Gegenstand der Erfindung sind daher Entschäumerdispersionen für wäßrige Tensidsysteme enthaltend 5 bis 40 % Silikonöl, 0,3 bis 15 % hydrophobierte Kieselsäure und Wasser, dadurch gekennzeichnet, daß die Entschäumerdispersion ein Dispergatorsystem aus einem tensidischen Hauptdispergatorsystem mit einem Alkylpolyglycosid als Hauptdispergator und einem wasserlöslichen oder wasserdispergierbaren Hilfsdispergatorsystem enthält.

Erfindungsgemäße Hildsdispergatoren sind wasserlösliche oder zumindest wasserdispergierbare Polymere vom Typ Xanthan Gum, Guar und seinen Derivaten, oder Cellulosederivate, sowie deren Gemische. Besonders bevorzugt sind Xanthane. Eine gewisse Stabilisierung der Dispersion läßt sich auch mit kleinen Mengen hydrophiler Kieselsäure gegebenenfalls in Kombination mit den genannten Polymeren erzielen. Hierbei kann es sich um pyrogen oder durch Fällung hergestellte Kieselsäure handeln. Derart hergestellte Entschäumerdispersionen zeigen sehr hohe Stabilitäten (6 Monate selbst bei erhöhter Temperatur) und gleichzeitig im Vergleich zu kommerziellen Entschäumern eine überlegene Wirkung, wie in den erfindungsgemäßen Beispielen gezeigt wird.

### Silikonöle

Die eingesetzten Silikonöle sind Organosiloxanpolymere der Struktur 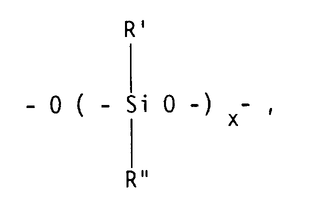 wobei R' und R'' Alkyl- oder Arylreste sind und x zwischen 20 und 2000 liegt. Die Struktur wird durch Trialkylsilylendgruppen vervollständigt. Bevorzugte Alkyl- bzw. Arylreste sind Methyl, Ethyl, Propyl und Isobutyl sowie Phenyl. Besonders bevorzugt sind Polydimethylsiloxane mit x-Werten zwischen 40 und 1000. Ganz besonders bevorzugt sind Polydimethylsiloxane mit x-Werten zwischen 50 und 600. Verwendet werden können insbesondere im Gemisch mit Polydialkylsiloxanen auch funktionalisierte Silikonöle.

### Hydrophobierte Kieselsäure

Die eingesetzte hydrophobierte Kieselsäure kann pyrogenen Ursprungs sein oder durch Fällung hergestellt werden. Ihre Hydrophobie erlangt sie z. B. durch Behandlung mit Tri- oder Dialkylsilanverbindungen. Bevorzugt werden durch Fällung hergestellte, hoch hydrophobierte Kieselsäuren mit spezifischen Oberflächen zwischen 50 und 300 m²/g.

### Hauptdispergatorsystem

Das Hauptdispergatorsystem besteht aus einem oder mehreren Hauptdispergatoren. Als Hauptdispergatoren werden Alkylpolyglycoside, insbesondere Alkylpolyglucoside, ggf. im Gemisch mit anionischen oder nichtionischen Tensiden verwendet.

Die erfindungsgemäß eingesetzten Alkylpolyglycoside genügen der Formel

R-O-Zₙ ,

in der R für einen linearen oder verzeigten, gesättigten oder ungesättigten aliphatischen Alkylrest mit 8 bis 16 Kohlenstoffatomen oder Gemische davon und Zₙ für einen Polyglycosylrest mit n = 1,0 bis 3 Hexose- oder Pentoseeinheiten oder Gemische davon stehen.

Bevorzugt werden Alkylpolyglycoside mit einem Polyglycosylrest mit n = 1,1 bis 2 Glycosyleinheiten, ganz besonders bevorzugt mit n = 1,1 bis 1,4 Glycosyleinheiten.

Die Alkylpolyglycoside können nach bekannten Verfahren auf Basis nachwachsender Rohstoffe hergestellt werden. Beispielsweise wird Dextrose in Gegenwart eines sauren Katalysators mit n-Butanol zu Butyl(poly)glucosidgemischen umgesetzt, welche mit langkettigen Alkoholen ebenfalls in Gegenwart eines sauren Katalysators zu den gewünschten Alkylpolyglucosidgemischen umglycosidiert werden. Oder Dextrose wird unmittelbar mit dem gewünschten langkettigen Alkohol umgesetzt.

Die Struktur der Produkte ist in bestimmten Grenzen variierbar. Der Alkylrest R wird durch die Auswahl des langkettigen Alkohols festgelegt. Günstig aus wirtschaftlichen Gründen sind die großtechnisch zugänglichen Tensidalkohole mit 8 bis 16 C-Atomen, insbesondere native Fettalkohole aus der Hydrierung von Fettsäuren bzw. Fettsäurederivaten. Verwendbar sind auch Ziegleralkohole oder Oxoalkohole.

Der Polyglycosylrest Zₙ wird einerseits durch die Auswahl des Kohlenhydrats und andererseits durch die Einstellung des mittleren Polymerisationsgrads n z. B. nach DE-OS 19 43 689 festgelegt. Im Prinzip können Polysaccharide wie z. B. Stärke oder Maltodextrine und Dextrose, etc. eingesetzt werden. Bevorzugt wird die großtechnisch leicht zugängliche Dextrose verwendet. Da die wirtschaftlich interessanten Alkylpolyglycosidsynthesen nicht regio- und stereoselektiv verlaufen, sind Alkylpolyglycoside stets Gemische von Oligomeren, die ihrerseits Gemische verschiedener isomerer Formen darstellen. n ist ein Mittelwert, der daher auch nicht ganzzahlig sein kann. Die Alkylpolyglycoside liegen nebeneinander mit α- und β-glycosidischen Bindungen in Pyranose- und Furanoseform vor. Auch die Verknüpfungsstellen zwischen zwei Saccharidresten sind unterschiedlich.

Erfindungsgemäß eingesetzte Alkylpolyglycoside lassen sich auch durch Abmischungen von Alkylpolyglycosiden mit Alkylmonoglycosiden herstellen. Letztere kann man z. B. nach EP-A 0 092 355 mittels polarer Lösemittel, wie Aceton, aus Alkylpolyglycosiden gewinnen bzw. anreichern.

Der Glycosidierungsgrad kann zweckmäßigerweise mittels Hochtemperaturgaschromatographie der silylierten Alkylpolyglycoside bestimmt werden.

Ökologisch zählen die Alkylpolyglycoside zu den umweltfreundlichsten Tensiden. So wurden bei Prüfung der biologischen Abbaubarkeit (Coupled Unit Test, DOC-Messung) Werte von 95 bis 97 % erreicht.

Die Toxizitätsdaten mit LD 50 (Ratte > 10 000 mg/kg, LC 50 (Goldorfe) 12 - 40 mg/l und EC 50 (Daphnia) 30 - 110 mg/l bei je 2 C₁₀C₁₂- bzw. C₁₂C₁₄-Alkylpolyglycosiden deuten ebenfalls ein im Vergleich mit vielen anderen Tensiden, auch üblichen Silikonentschäumerdispergatoren, hervorragendes Umweltverhalten an. Folglich ist ihr Einsatz bei dieser Anwendung von großem Vorteil.

In manchen Fällen kann es zweckmäßig sein, das Alkylpolyglycosid mit bis zu 40 %, vorzugsweise bis zu 20 % Hilfstensid, zu kombinieren. Als Hilfstenside sind anionische Tenside wie C₁₀-C₁₈-Fettalkoholsulfate, C₁₀-C₁₈-Fettalkoholethersulfate mit 1 bis 3 Mol Ethylenoxid/mol sowie nichtionische Tenside, wie C₈-C₁₄-Fettsäure-N-Alkylglucamide oder deren Gemische, geeignet.

### Hilfsdispergatorsystem

Das Hilfsdispergatorsystem besteht aus einem oder mehreren Hilfsdispergatoren. Ein erfindungsgemäßer Hilfsdispergator ist Xanthan Gum, ein umweltfreundliches, biotechnologisch durch Fermentation z. B. von Glucose mittels Mikroorganismen hergestelltes, hochmolekulares Polymer. Seine Molmasse liegt bei ca. 2 Millionen, seine Struktur basiert nicht unähnlich wie die des Dispergators Alkylpolyglucosid auf Glucose (neben wenig Mannose und Glucuronsäure).

Weitere erfindungsgemäße Hilfsdispergatoren sind Guar und insbesondere Guarderivate, wie z. B. propoxyliertes Guar (Hydroxypropylguar). Guar, aus dem Samen der Guarpflanze gewonnen, basiert ebenfalls auf Kohlenhydratstrukturen, insbesondere von Mannose und Galactose. Es besitzt üblicherweise Molmassen von etwa 1 000 000.

Erfindungsgemäße Hilfsdispergatoren sind auch Cellulosederivate, die bekanntlich ebenfalls auf Kohlenhydratstrukturen beruhen. Infrage kommen hier insbesondere nichtionische Polymere wie Hydroxyethyl- und Hydroxypropylcellulose mit Substitutionsgraden, die eine Wasserverträglichkeit garantieren. Sie lassen sich z. B. durch Umsetzung von Alkalicellulose mit Ethylenoxid oder Propylenoxid herstellen. Die Molmassen dieser Polymere liegen vorzugsweise zwischen 50 000 und 5 000 000.

Erfindungsgemäße Hilfsdispergatoren sind auch hydrophile Kieselsäure und Gemische aus den genannten Polymeren sowie aus Polymer(en) und hydrophiler Kieselsäure.

### Entschäumerdispersion

Die Entschäumerdispersionen bestehen aus 5 bis 40 % Silikonöl, 0,3 bis 15 % hydrophobierter Kieselsäure, 2 bis 30 % Hauptdispergatorsystem, 0,1 bis 10 % Hilfsdispergatorsystem und Wasser. Bevorzugt werden 10 bis 30 % Silikonöl, 0,8 bis 5 % hydrophobierte Kieselsäure, 3 bis 15 % Hauptdispergatorsystem, 0,5 bis 7 % Hilfsdispergatorsystem sowie Wasser.

Besonders bevorzugt sind 15 bis 25 % Silikonöl, 1 bis 3 % hydrophobierte Kieselsäure, 7 bis 12 % Hauptdispergatorsystem und 0,7 bis 3 % Hilfsdispergatorsystem sowie Wasser.

Enthält der Entschäumer hydrophile Kieselsäure als Hilfsdispergator, so sollte dessen Menge geringer sein als die der hydrophobierten Kieselsäure.

Bevorzugt sind hydrophobierte Fällungskieselsäure und Polydimethylsiloxan mit x zwischen 40 und 1000 als Silikonöl, Alkylpolyglucosid in Kombination mit 0 bis 40 % Hilfstensid (bezogen auf Gesamttensid) als Hauptdispergatorsystem und Xanthan mit 0 bis 50 % Copolymer als Hilfsdispergatorsystem. Besonders bevorzugt sind Alkylpolyglucoside als Haupt- und Xanthan als Hilfsdispergator.

Die Entschäumerdispersionen lassen sich durch einfaches Zusammenrühren der Bestandteile unter Anwendung geringer Scherkräfte herstellen. Eine bevorzugte Herstellungsart besteht darin, das Hauptdispergatorsystem in dem Silikonöl zu dispergieren und sodann mit der hydrophobierten Kieselsäure zu verrühren. Anschließend wird mit der wäßrigen Polymerlösung vereinigt.

Die erfindungsgemäßen Beispiele (Tabelle 1) sollen das Verfahren erläutern. Es wurden sowohl die Dispersionsstabilität als auch die Entschäumerwirkung im Vergleich zu kommerziellen Silikonentschäumern getestet. Die Lagerstabilität (z. T. bei erhöhter Temperatur) wurde visuell beurteilt. Zur Messung des Schaumvermögens wurde nach einer manuellen Schlagmethode (250 ml 0,1 %ige Tensidlösung oder 0,5 %ige Waschmittellösung in einem hohen zylindrischen Gefäß (Durchmesser 5,5 cm, 1250 ml Inhalt), mit einer Lochplatte von 4,5 cm Durchmesser, 20 Löcher mit 0,5 cm Durchmesser) 10 mal geschlagen und sofort die Schaumhöhe notiert. Die Reproduzierbarkeit der Messung lag zwischen 5 und 10 %. Zur Entschäumerprüfung wurden jeweils 0,025 g/l Entschäumer der Tensidlösung hinzugefügt. Die Beispiele 1 und 4 bis 11 demonstrieren die hohe Entschäumerwirkung bei ausgezeichneter Dispersionsstabilität im Vergleich zum Stand der Technik. Ähnliche Ergebnisse wie hier bei neutral eingestellten Tensidlösungen wurden auch im hoch alkalischen Bereich beobachtet.

Die Bezeichnung in der Tabelle 1 bedeuten:
(1) Polydimethylsiloxane der Firma Wacker
(2) Polydimethylsiloxan der Firma Nünchritz
(3) hydrophobierte Fällungskieselsäure der Fa. Degussa
(4) C₁₂C₁₄ APG_{1,2}
(5) C₈C₁₀ APG der Fa. Henkel
(6) C₁₀ APG der Fa. Seppic
(7) Xanthan der Fa. Kelco
(8) Hydroxypropylguar der Fa. Meyhall
(9) hydrophile Kieselsäure der Fa. Degussa

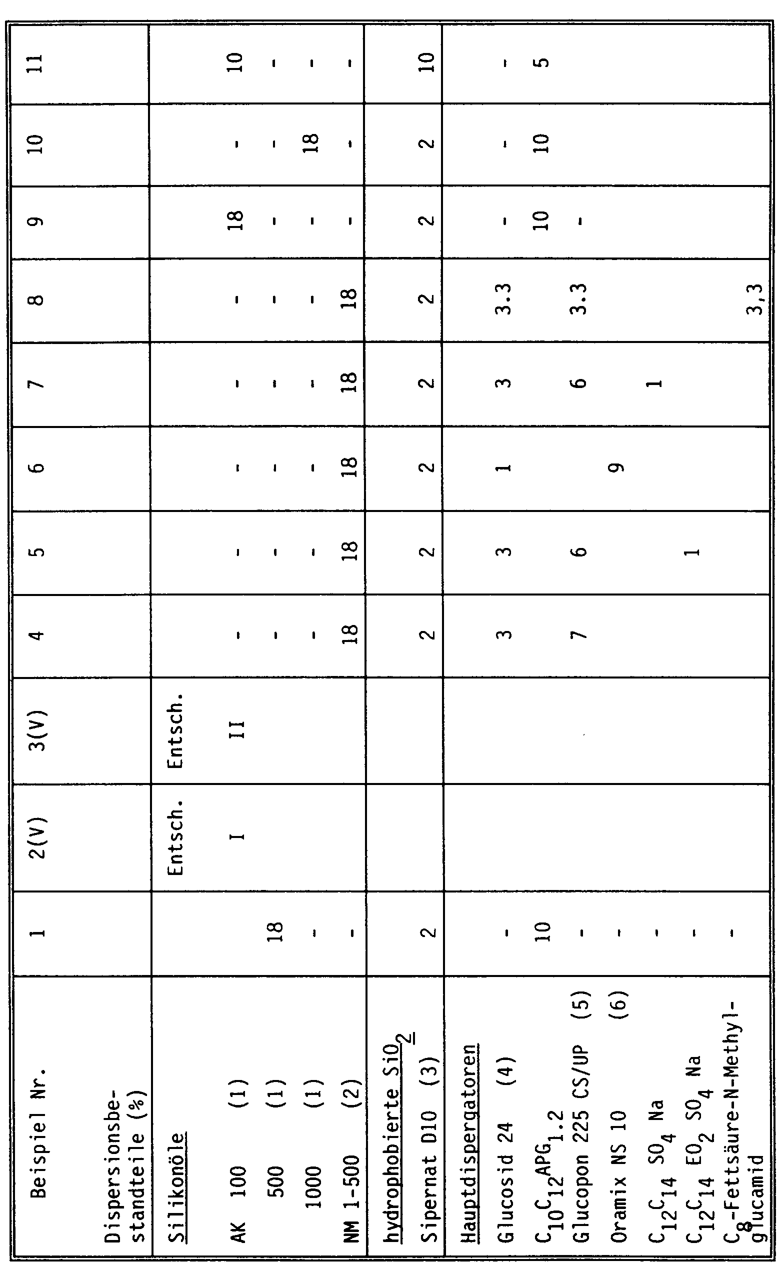

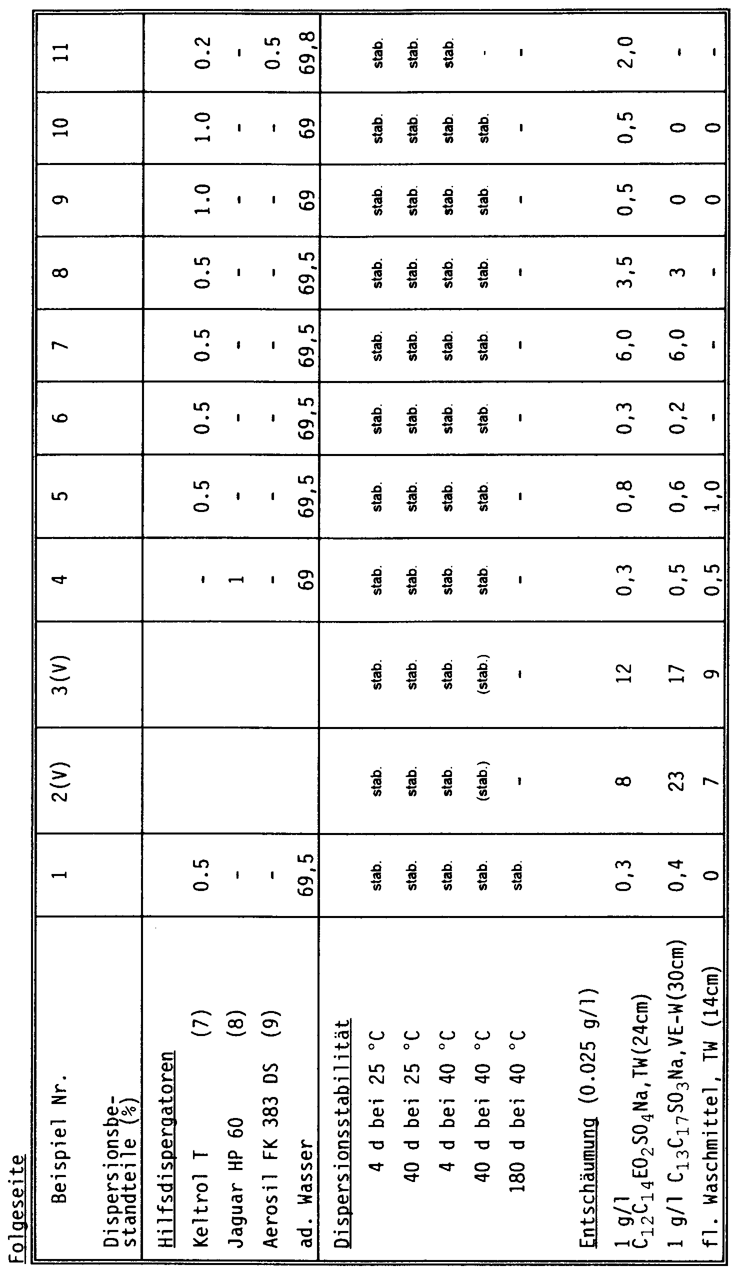

## Patentansprüche

1. Entschäumerdispersion für wäßrige Tensidsysteme, enthaltend 5 bis 40 % Silikonöl, 0,3 bis 15 % hydrophobierte Kieselsäure und Wasser,
dadurch gekennzeichnet,
daß die Entschäumerdispersion ein Dispergatorsystem aus einem tensidischen Hauptdispergatorsystem und einem nicht-tensidischen wasserlöslichen oder wasserdispergierbaren Hilfsdispergatorsystem enthält.

2. Entschäumerdispersion nach Anspruch 1,
dadurch gekennzeichnet,
daß der Hauptdispergator des Hauptdispergatorsystems Alkylpolyglycosid der Formel I,
R-O-Zₙ (I)
ist, worin R einen linearen oder verzweigten, gesättigten oder ungesättigten Alkylrest mit 8 bis 16 C-Atomen und Zₙ einen Oligoglycosidrest, bei dem n im Mittel 1 bis 3 ist, bedeutet.

3. Entschäumerdispersion nach Anspruch 1,
dadurch gekennzeichnet,
daß das Hauptdispergatorsystem zu mindestens 60 % (bez. auf das Dispergatorsystem) aus Alkylpolyglycosid der Formel I
R-O-Zₙ (I)
besteht, worin R einen lineraren oder verzweigten, gesättigten oder ungesättigten Alkylrest mit 8 bis 16 C-Atomen und Zₙ einen Oligoglycosidrest, bei dem n im Mittel 1 bis 3 ist, bedeutet.

4. Entschäumerdispersion nach Anspruch 2 oder 3,
dadurch gekennzeichnet,
daß n im Mittel einen Wert von 1,1 bis 2 bedeutet.

5. Entschäumerdispersion nach einem der vorhergehenden Ansprüche,
dadurch gekennzeichnet,
daß das Hauptdispergatorsystem zu 0 bis 40 % aus anionischem und/oder nichtionischem Tensid besteht.

6. Entschäumerdispersion nach einem der vorhergehenden Ansprüche,
dadurch gekennzeichnet,
daß das Hauptdispergatorsystem zu 0 bis 20 % aus anionischem und/oder nichtionischem Tensid besteht.

7. Entschäumerdispersion nach einem der Ansprüche 5 oder 6,
dadurch gekennzeichnet,
daß das anionische Tensid ein C₈-C₁₈-Fettalkohol und/oder C₈-C₁₈-Fettalkoholethersulfat mit 1 bis 3 mol Ethylenoxid pro mol ist.

8. Entschäumerdispersion nach einem der Ansprüche 5 oder 6,
dadurch gekennzeichnet,
daß das nichtionische Tensid C₈-C₁₄-Fettsäure-N-alkylglucamid ist.

9. Entschäumerdispersion nach einem der Ansprüche 1 bis 8,
dadurch gekennzeichnet,
daß die Konzentration des Hauptdispergatorsystems 3 bis 30 Gew.-% beträgt.

10. Entschäumerdispersion nach einem der Ansprüche 1 bis 8,
dadurch gekennzeichnet,
daß die Konzentration des Hauptdispergatorsystems 3 bis 15 Gew.-% beträgt.

11. Entschäumerdispersion nach einem der Ansprüche 1 bis 9,
dadurch gekennzeichnet,
daß als Hilfsdispergatoren Xanthane, Guar und Guarderivate, Cellulosederivate, deren Mischungen untereinander sowie deren Mischungen mit hydrophiler Kieselsäure eingesetzt werden.

12. Entschäumerdispersion nach Anspruch 11,
dadurch gekennzeichnet,
daß die Polymere Molmassen zwischen 50 000 und 5 000 000 besitzen.

13. Entschäumerdispersion nach einem der Ansprüche 1 bis 12,
dadurch gekennzeichnet,
daß die Konzentration des Hilfsdispergatorsystems 0,1 bis 10 Gew.-% beträgt.

14. Entschäumerdispersion nach einem der Ansprüche 1 bis 12,
dadurch gekennzeichnet,
daß die Konzentration des Hilfsdispergatorsystems 0,5 bis 7 Gew.-% beträgt.

15. Verwendung der Entschäumerdispersion nach einem der Ansprüche 1 bis 14 als Antischaummittel für Wasch- und Reinigungsmittel und/oder Textilveredelungsflotten.
